# EUROPEAN PATENT APPLICATION

(11) **EP 1 653 093 A1**
(43) Date of publication of application: **03.05.2006**
(21) Application number: 04748197.3
(22) Date of filing: 02.08.2004
(51) Int. Cl.: F16C 11/04

(54) **HINGE DEVICE**

(30) Priority: 01.08.2003 JP 2003285465
(71) Applicant: NHK SPRING CO., LTD., Yokohama-shi, Kanagawa 236-0004 (JP)
(72) Inventor: SAITO, Makoto, NHK Spring Co., Ltd., Kamiina-gun, Nagano 399-4301 (JP); KITAMURA, Yoshiharu, NHK Spring Co., Ltd., Aiko-gun, Kanagawa 243-0303 (JP); WATANABE, Hitoshi, NHK Spring Co., Ltd., Kamiina-gun, Nagano 399-4301 (JP)
(74) Representative: Grünecker, Kinkeldey, Stockmair & Schwanhäusser Anwaltssozietät
(86) International application number: PCT/JP2004/011064
(87) International publication number: WO 2005/012739

(57) **Abstract**

A rotation-side member is held at a specified angle. Radial downsizing of the hinge device is possible due to its simple structure. Rotational operability is improved, and adjustment of torque is easy. This device comprises
a friction-force generating mechanism 12 that has a shaft 13 ― which rotatably supports a rotation-side member 3 against a stationary-side member 2 in both the forward and reverse directions ― and holds the angle of the rotated rotation-side member 3 by friction force, and
a torsion bar 14 (1) that penetrates through the shaft 13 in the axial direction, (2) whose two ends are directly or indirectly fixed, respectively, to a stationary-side member 2 and a rotation-side member 3, and (3) that is twisted by rotation of the rotation-side member 3 in the forward or reverse direction, so as to store torque for energizing the rotation-side member 3 in the direction opposite to the rotation.

## Description

### Field of the Invention

The present invention relates to a hinge device that includes a rotation-side member that is supported rotatably on a stationary-side member, and that is such that the rotation-side member is held at a specified angle with respect to the stationary-side member, and relates in particular to a hinge device whose rotation-side member can be rotated by a small amount of force.

### Background of the Invention

A terminal (such as a personal computer, a word processor, or a mobile phone), an LCD monitor, or the like can have a structure wherein its display can be opened up from, or closed on, its main body. Also, in the structure of a typical western-style toilet bowl, the seat and toilet seat cover can be opened or closed. In such opening and closing, it is preferable that the rotation-side member, such as the display or cover, be held at an appropriate angle against the stationary-side member, so that the display or comparable moving part can be easily viewable, and so that operability of the item can be improved.

Japanese Published Unexamined Patent Application No. H09-196048 discloses a hinge device wherein a rotation-side member is rotatably supported on a stationary-side member, and wherein said rotation-side member is held at a specified angle. With this hinge device, a friction washer and a spring washer are overlaid on a rotary shaft that is located between the rotation-side member and the stationary-side member, and the rotation-side member is held at a specified angle by the friction force that is generated between the large-diameter portion of the rotary shaft and said washers. Also, in this structure, a torsion coil spring to energize the rotation-side member in the opening direction is wound around the rotary shaft, so as to reduce the force needed to rotate the rotation-side member in the opening direction.

This hinge device is designed to improve the procedure of rotating the rotation-side member in one direction only, namely in opening the rotation-side member. When the rotation-side member is completely open after having been rotated 180 degrees, a large force is then necessary to reversely rotate the rotation-side member of this hinge device ― namely, to rotate the rotation-side member in the closing direction i.e., to close the rotation-side member. Because the torsion coil spring energizes the rotation-side member in the opening direction, it is necessary ― when performing a reverse rotation to close the rotation-side member ― to apply an operating force large enough to overcome not only the friction force of the washer but also the energizing force from the torsion coil spring. Thus, such a hinge device improves operability only in opening the rotation-side member, and has the disadvantage of deteriorated operability in closing it.

Japanese Patent Publication No. 3420991 discloses a hinge device that improves the operability of rotation of a rotation-side member in both the forward and reverse directions. With this hinge device, a rotation-side hinge member that is connected with a rotation-side member is formed so as to have a shaft-like shape, and this shaft-like rotation-side hinge member is rotatably inserted in a supporting hole of a stationary-side hinge member that is connected with a stationary-side member. Due to this insertion, frictional resistance is generated between the outer periphery of the rotation-side hinge member and the inner periphery of the supporting hole. This frictional resistance makes it possible for the rotation-side member to be held at a specified angle.

In addition, a coil spring is arranged between the shaft-like rotation-side hinge member and the supporting hole of the stationary-side hinge member. The coil spring is placed on the shaft-like rotation-side hinge member under the condition that the coil spring extends in the lengthwise direction of the rotation-side hinge member. When the rotation-side hinge member rotates from its neutral position in either the forward or reverse direction, the coil spring energizes the rotation-side hinge member in a manner so as to reversely rotate the rotation-side hinge member to return it to the neutral position. With this hinge device, the torque of the coil spring acts on the rotation-side member in both the opening operation and the closing operation, and therefore this hinge device is capable of improving operability in both the forward and reverse directions (both the opening and closing directions).
- Patent Document 1: Japanese Published Unexamined Patent Application No. H09-196048
- Patent Document 2: Japanese Patent Publication No. 3420991

The hinge device described in Japanese Patent Publication No. 3420991 has the following problems.
(1) Because a coil spring is used to reduce the operating force in both the forward and reverse directions, a space for accommodating the diameter of the coil spring is necessary, and thus the entire hinge device becomes so large in its radial direction that the hinge device cannot be downsized.
(2) Because the torque of the coil spring varies depending on how many times the coil has been wound, the torque can vary greatly. Also, because the torque varies depending on the number of times the coil has been wound, it is difficult to adjust the torque of the coil spring to zero at its neutral position, and the entire hinge device easily moves when the coil is in the neutral position, resulting in noise.
(3) The rotation-side member is held at a desired angle by the frictional resistance between the outer periphery of the rotation-side hinge member and the inner periphery of the supporting hole. Therefore, in order to generate the desired frictional resistance, the axial length of the entire device inevitably becomes long, and it is difficult to shorten the length.
(4) It is necessary for this hinge device to have a switching member for switching the torque of the coil spring and applying the torque when rotating the rotation-side member in either the forward or reverse direction. Therefore, this hinge device requires a large number of parts, and thus its structure becomes complicated. Accordingly, assembly of this hinge device is troublesome, and it is impossible to reduce the weight of the hinge device and to produce a lightweight hinge device.

One object of the present invention is to provide a hinge device that solves the above-mentioned problems of the hinge device described in Japanese Patent Publication No. 3420991. More specifically, the present invention aims to provide a hinge device that is easy to downsize, provides easy adjustment of torque at the neutral position, and whose structure is simplified so as to facilitate its assembly.

### Disclosure of the Invention

A hinge device of Claim 1 comprises
a friction-force generating mechanism that has a shaft supporting ― rotatably in both the forward and reverse directions ― a rotation-side member on the stationary-side member, and that uses friction force to hold the angle of the rotated rotation-side member, and
a torsion bar that penetrates through said shaft in the axial direction, with one end of said torsion bar directly or indirectly fixed to said stationary-side member, and the other end of said torsion bar directly or indirectly fixed to the rotation-side member, and that ― by being twisted by the rotation of the rotation-side member in either the forward or reverse direction ― stores torque that energizes the rotation-side member in the direction opposite to said rotation of the rotation-side member.

The friction force of the friction-force generating mechanism of the invention of Claim 1 holds the angle of the rotation-side member at a specified position. The torsion bar penetrates through a shaft of the friction-force generating mechanism. When the torsion bar is twisted as the rotation-side member rotates, torque is generated in the torsion bar in the direction opposite to the rotation of the rotation-side member, and this torque acts on the rotation-side member in such a way that the rotation-side member can be rotated ― by little operating force ― in both the forward and reverse directions.

In the invention of Claim 1, the torsion bar is used as an energizing means that functions in such a way that the amount of force necessary to rotate the rotation-side member with less operating force in either the forward or reverse directions can be reduced, and because the torsion bar penetrates through the shaft of the friction-force generating mechanism, the friction-force generating mechanism and the torsion bar take up only a small space radially, and therefore downsizing is possible. Also, it is easy to adjust the torque of the torsion bar ― when it is at its neutral position ― to approximately zero, because variation in the torque, which depends on how many times the coil has been wound, is small.

Furthermore, the torsion bar― as it is ― is able (1) to be twisted in both the forward and reverse directions, and (2) to store torque whose direction is opposite to either the forward or reverse direction of the rotation-side member. For this reason, a switching member is not necessary, and therefore the hinge device requires only a small number of members, making it easy to assemble and to downsize.

An invention of Claim 2 is a hinge device as described in Claim l, and
wherein said torsion bar is arranged in such a way that the torque is approximately zero when the rotation-side member is approximately perpendicular to the stationary-side member, and that
said torque increases as the angle of the rotation-side member changes, from its approximately perpendicular position, due to the rotation of the rotation-side member in the forward or reverse direction.

In the invention described in Claim 2, the torque of the torsion bar ― when the rotation-side member is approximately perpendicular to the stationary-side member (the neutral position) ― is approximately zero, and therefore it is possible for the rotation-side member to be stably held at said neutral position by the friction-force generating mechanism. Also, because the torque (which is in the opposite direction to the rotation of the rotation-side member) of the torsion bar increases along with the rotation of the rotation-side member ― in either the forward or reverse direction ― starting from the neutral position, the force to rotate the rotation-side member in said opposite direction can be reduced, thereby improving operability in both the forward and reverse directions.

An invention of Claim 3 is a hinge device as described in Claim 1 or 2, and wherein
hinge brackets ― which are connected with the stationary-side member and the rotation-side member, respectively ― are attached to said shaft, and
said torsion bar penetrates through these hinge brackets.

In the invention of Claim 3, because the torsion bar penetrates through the hinge brackets connected with the stationary-side member and the rotation-side member, the hinge brackets do not need to have spaces where the torsion bar is to be arranged, and thereby downsizing is possible.

An invention of Claim 4 is a hinge device as described in any of Claims 1 to 3, and wherein
at least one end of said torsion bar is exposed outside the shaft, and
the exposed end is directly fixed to either the stationary-side member or the rotation side member.

In the invention of Claim 4, because at least one end of the torsion bar is directly fixed to either the stationary-side member or the rotation-side member, no additional member is needed for fixing the torsion bar. Therefore, the number of parts of the hinge device is reduced, and the weight and cost thereof also can be reduced.

An invention of Claim 5 is a hinge device as described in Claim 3 or 4, and wherein one end of said torsion bar is fixed to and engaged with either a hinge bracket of the corresponding stationary-side member or the corresponding rotation-side member.

Because the end of the torsion bar is engaged with the hinge bracket of the stationary-side member or the rotation-side member, twisting of the torsion bar is surely performed by rotation of the rotation-side member, thereby always storing torque.

An invention of Claim 6 is a hinge device as described in any of Claims 3 to 5, and wherein
there is formed in said hinge bracket a relief part that prevents twisting of the torsion bar when the angle of the rotation-side member against the stationary-side member is within a predetermined range.

In the invention of Claim 6, because the relief part in the hinge bracket prevents twisting of the torsion bar, it is possible to set the amount of torque ― generated by the torsion bar when the rotation-side member rotates ― within a desired range, and therefore the hinge device can have more variety in its design.

An invention of Claim 7 is a hinge device as described in Claim 1, and wherein
said friction-force generating mechanism is equipped with a spring washer that (1) is formed so as to have a U-shaped cross-section, and (2) directly or indirectly overlaps and comes into contact with said shaft under a condition that the spring washer is bent.

In the invention of Claim 7, because the spring washer for generating friction force is formed so as to have a U-shaped cross-section, the spring washer always is directly or indirectly in contact with the shaft. This makes it possible for the rotation-side member to be stably held at a desired angle by friction force.

### Brief Description of the Drawings

Figure 1 is a side view showing the opening ("A") and closing ("B") conditions of a notebook personal computer, to which the present invention is applied.
Figure 2 shows Embodiment 1 of the present invention in an assembled condition; (a) is a front view, (b) is a left-side view, (c) is a right-side view, and (d) is a bottom view.
Figure 3 shows a shaft used in Embodiment 1; (a) is a side view, (b) is a top view, and (c) is a bottom view.
Figure 4 shows a friction plate; (a) is a side view, and (b) is a front view.
Figure 5 shows a spring washer; (a) is a side view, and (b) is a cross-sectional view.
Figure 6 shows a rotation-side hinge bracket used in Embodiment 1; (a) is a front view, (b) is a left-side view, (c) is a right-side view, and (d) is a bottom view.
Figure 7 shows a stationary-side hinge bracket used in Embodiment 1; (a) is a front view, (b) is a left-side view, (c) is a right-side view, and (d) is a bottom view.
Figure 8 is a front view of a torsion bar used in Embodiment 1.
Figure 9 shows Embodiment 2 in an assembled condition; (a) is a front view, (b) is a left-side view, (c) is a right-side view, and (d) is a bottom view.
Figure 10 shows a shaft used in Embodiment 2; (a) is a side view, (b) is a top view, and (c) is a bottom view.
Figure 11 shows a rotation-side hinge bracket used in Embodiment 2; (a) is a front view, (b) is a left-side view, (c) is a right-side view, and (d) is a bottom view.
Figure 12 shows a stationary-side hinge bracket used in Embodiment 2; (a) is a front view, (b) is a left-side view, (c) is a right-side view, and (d) is a bottom view.
Figure 13 shows Embodiment 3 in an assembled condition; (a) is a front view, (b) is a left-side view, (c) is a right-side view, and (d) is a bottom view.
Figure 14 shows a rotation-side hinge bracket used in Embodiment 3; (a) is a front view, (b) is a left-side view, (c) is a right-side view, and (d) is a bottom view.
Figure 15 shows a stationary-side hinge bracket used in Embodiment 3; (a) is a front view, (b) is a left-side view, (c) is a right-side view, and (d) is a bottom view.
Figure 16 are a left-side view and an enlarged cross-sectional view showing a variation of the rotation-side hinge bracket of Embodiment 3.
Figure 17 shows Embodiment 4 in an assembled condition; (a) is a front view, (b) is a left-side view, (c) is a right-side view, and (d) is a bottom view.
Figure 18 shows a stationary-side hinge bracket used in Embodiment 4; (a) is a front view, (b) is a right-side view, and (c) is a bottom view.
Figure 19 shows a rotation-side hinge bracket used in Embodiment 4; (a) is a front view, (b) is a right-side view, and (c) is a bottom view.
Figure 20 shows a torsion bar used in Embodiment 4, (a) is a front view, and (b) is a left-side view.
Figure 21 shows a processed torsion bar used in Embodiment 4; (a) is a side view, and (b) is the view from the mounting-part side (left side in this figure).
Figure 22 is a front view showing Embodiment 4 in a fixed condition.
Figure 23 shows Embodiment 5 in an assembled condition; (a) is a front view, (b) is a left-side view, (c) is a right-side view, and (d) is a bottom view.

### Explanation of Alpha-Numeric Characters in the Drawings

- 2: stationary-side member
- 3: rotation-side member
- 11, 21, 31, 41, 51: hinge device
- 12, 22, 32, 42: friction-force generating mechanisms
- 13,23: shafts
- 14, 24, 34, 44: torsion bars

### Description of the Preferred Embodiments

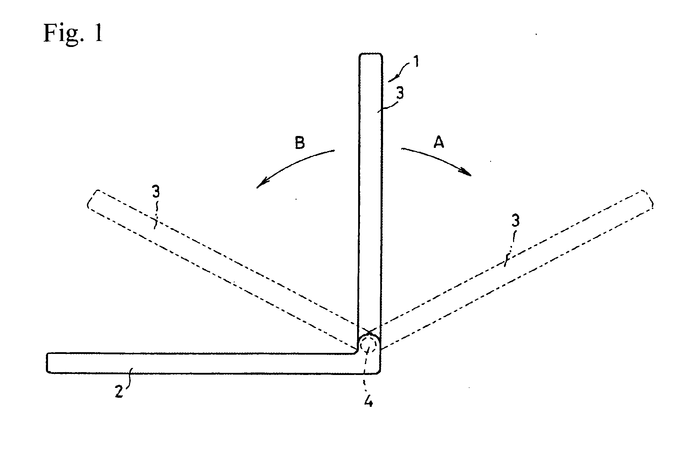

Figure 1 shows a notebook personal computer 1, to which the hinge device of the present invention is applied, and in which the base on which a keyboard (not shown) is arranged serves as the stationary-side member 2. A display, which rotates in both forward and reverse directions to open or close with respect to the stationary-side member (base) 2, serves as the rotation-side member 3. In Figure 1, the arrow A shows the direction of rotation for opening the rotation-side member (display) 3, and the arrow B shows the direction of rotation for closing it.

In each below-described embodiment of the hinge device, the rotation-side member 3 is arranged on a bearing portion 4 that rotatably supports the rotation-side member 3, so that the rotation-side member 3, which can rotate if pushed, is held at whatever angle is desired. In this case, the rotation-side member 3 shown by solid lines is in the neutral position, where said rotation-side member 3 is approximately perpendicular to the stationary-side member 2. Also, the rotation-side member 3 can rotate within a range of about 180 degrees with respect to the stationary-side member 2.

The hinge device in the present invention will be explained in detail below, with reference to the illustrations of embodiments. Also, in the embodiments, the same number is given to each corresponding part for the sake of consistency.

### (Embodiment 1)

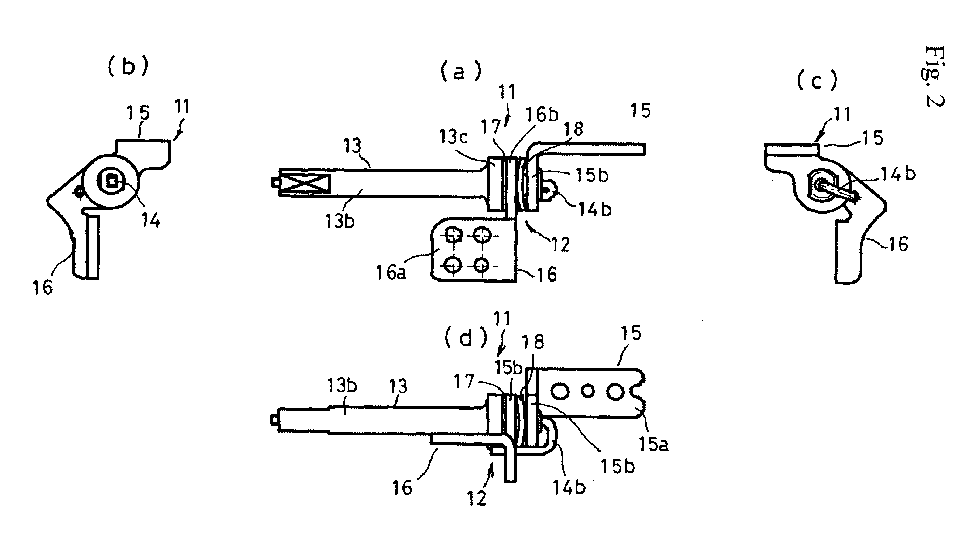

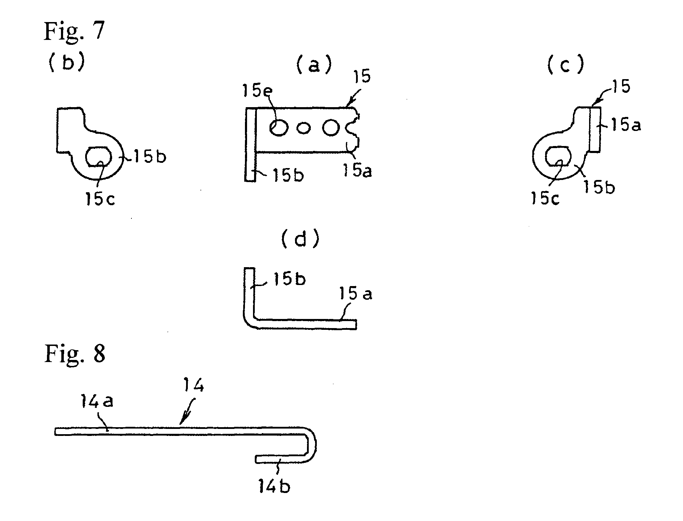

Figures 2 to 8 show Embodiment 1 of the present invention. Figure 2 shows it in an assembled condition. The hinge device 11 in this embodiment comprises a friction-force generating mechanism 12 that includes a shaft 13, a torsion bar 14 (see Figure 8) that penetrates inside the shaft 13, a stationary-side hinge bracket 15, and a rotation-side hinge bracket 16.

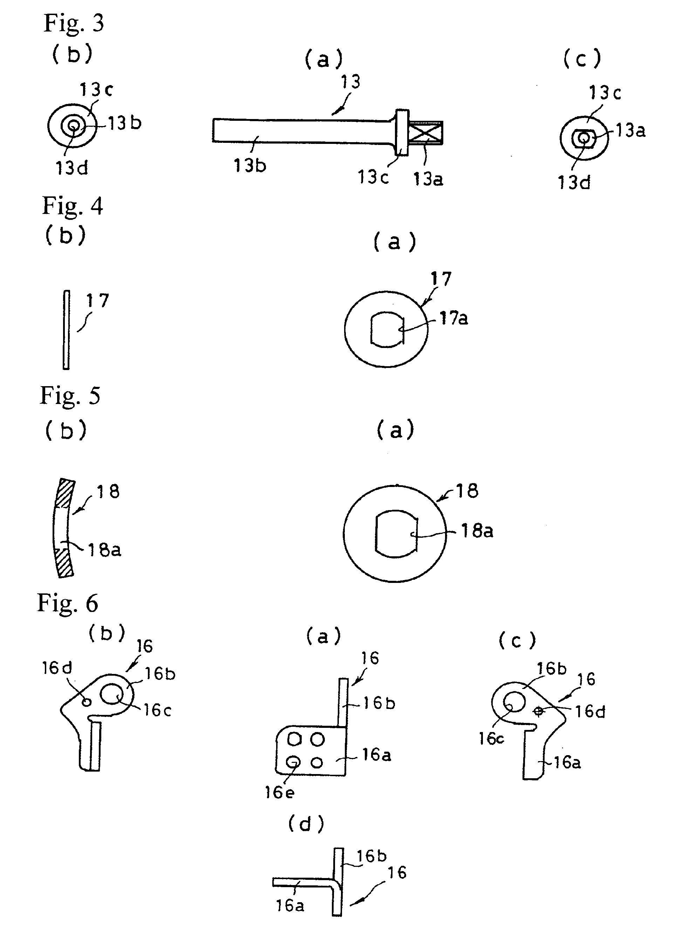

As shown in Figure 3, the shaft 13 of the friction-force generating mechanism 12, comprises
a mounting shaft part 13a, whose cross-section has an oval shape by being cut in such a way that the top side of its cross-section and the bottom side of its cross-section are parallel to each other,
a shaft part 13b that coaxially with the mounting shaft part 13a extends to the opposite side of the mounting shaft part 13a,
a large-diameter, flange part 13c that is formed integrally with said mounting shaft part 13a and said shaft part 13b in the boundary area between these latter two parts, and
a through-hole 13d, whose cross-section is circular and which penetrates through the shaft 13 in the axial direction. A torsion bar 14, which will be described later, is inserted into the through-hole 13d so as to penetrate the shaft 13 in the axial direction.

In addition to the shaft 13, the friction-force generating mechanism 12 is equipped with a friction plate 17 (see Figure 4) and a spring washer 18 (see Figure 5). The friction plate 17 and the spring washer 18 are attached to the mounting shaft part 13a of the shaft 13.

As shown in Figure 4, the friction plate 17 is formed so as to have a disc shape whose outside diameter is approximately equal to the outside diameter of the flange part 13c of the shaft 13. A mounting hole part 17a, whose shape corresponds to the oval-shaped mounting shaft part 13a, is formed at the central area of the friction plate 17. The mounting shaft part 13a of the shaft 13 is inserted into the mounting hole part 17a, so that the friction plate 17 is mounted to the shaft 13 under the condition that the surface of the friction plate 17 comes into contact with the surface of the flange part 13c, as shown in Figure 2. Because the oval-shaped mounting shaft part 13a fits with the mounting hole part 17a, the friction plate 17 is restrained from rotating against the shaft 13.

The outside diameter of the spring washer 18 also is approximately equal to the outside diameter of the flange part 13c of the shaft 13. As shown in Figure 5, a mounting hole 18a ― whose shape corresponds to the shape of the mounting shaft part 13a of the shaft 13 ― is formed at the central area of the spring washer 18. Because the mounting shaft part 13a is inserted into the mounting hole part 18a under the condition that the mounting shaft part 13a fits with the mounting hole part 18a, the spring washer 18 is mounted to the shaft 13 under the condition that the spring washer 18 is restrained from rotating against the shaft 13.

The spring washer 18 is bent so that its cross-section has a U-shape, and it is mounted to the shaft 13 under this bent condition. Because the spring washer 18 is formed so that its cross-section has a U-shape, the spring washer 18 can surely come into contact with the other part with which it is to be connected (i.e., the rotation-side hinge bracket 16 in this embodiment), so that stable friction force can be obtained.

As shown in Figure 7, the stationary-side hinge bracket 15 is constituted in such a way that a stationary plate part 15a and a mounting plate part 15b are integrally formed under the condition that the stationary plate part 15a and the mounting plate part 15b are approximately perpendicular to each other. The stationary plate part 15a is to be fixed to the stationary-side member (base) 2, shown in Figure 1, and for that purpose a fixing hole 15e is formed in the stationary plate part 15a. The mounting plate part 15b is to be mounted to the shaft 13. An axial hole 15c, through which the shaft 13 penetrates, is formed in the mounting plate part 15b. The mounting shaft part 13a of the shaft 13 is to be inserted in the axial hole 15c under an engagement condition, and therefore the cross-section of the axial hole 15c has a non-circular shape that corresponds to the outer shape of the mounting shaft part 13a. In this manner, the mounting shaft part 13a fits with the axial hole 15c, so that the stationary-side hinge bracket 15 is mounted to the shaft 13 under a rotation-restraining condition.

As shown in Figure 6, the rotation-side hinge bracket 16 is constituted in such a way that a stationary plate part 16a and a mounting plate part 16b are integrally formed under the condition that the stationary plate part 16a and the mounting plate part 16b are approximately perpendicular to each other. The stationary plate part 16a is to be fixed to the rotation-side member (display) 3, shown in Figure 1, and for that purpose, a fixing hole 16e is formed in the stationary plate part 16a. The mounting plate part 16b is to be mounted to the shaft 13, and is formed with an axial hole 16c, through which the shaft 13 penetrates. The mounting shaft part 13a of the shaft 13 is inserted into the axial hole 16c. The axial hole 16c is formed so as to have a circular shape that contrasts with the non-circular cross-section of the mounting shaft part 13a, and therefore the rotation-side hinge bracket 16 can rotate against the shaft 13. Also, a lock hole 16d for locking one end of the torsion bar 14 therewith is formed in the mounting plate part 16b.

Figure 8 shows a torsion bar 14. The torsion bar 14 has a circular cross-section, and penetrates through the through-hole 13d in the axial direction so as to be mounted to the shaft 13. The torsion bar 14 has a linear main body 14a that is to be inserted into the through-hole 13d, and a lock part 14b that is bent into a U-shape at one end of the main body 14a. In addition, the lock part 14b can have any other shape, provided that the lock part 14b can be locked to the stationary-side hinge bracket 15, and therefore the lock part 14b can have a shape other than a U-shape, such as an L-shape.

To assemble the hinge device 11 of this embodiment, as shown in Figure 2, the friction plate 17, the mounting plate part 16b of the rotation-side hinge bracket 16, the spring washer 18, and the mounting plate part 15b of the stationary-side hinge bracket 15 are sequentially assembled onto the non-circular mounting shaft part 13a. In this case, the spring washer 18 is arranged in such a direction that the peak of the U-shape of the spring washer 18 makes contact with the mounting plate part 15b of the stationary-side hinge bracket 15. Then, one end of the mounting shaft part 13a of the shaft 13 is clamped under the condition that the spring washer 18 is flexed in such a manner as to pressurize the mounting plate part 16b of the rotation-side hinge bracket 16. In this structure, the mounting plate part 16b of the rotation-side hinge bracket 16 is nipped between the friction plate 17 and the spring washer 18, so that the friction-force generating mechanism 12 is formed.

Meanwhile, the main body 14a of the torsion bar 14 is inserted through the shaft part 13b of the shaft 13 from the direction of the stationary-side hinge bracket 15, and the lock part 14b is locked to the lock hole 16d of the rotation-side hinge bracket 16. Also, the tip of the shaft part 13b is clamped, so that the main body 14a of the torsion bar 14 is fixed onto the shaft 13 ― namely, onto the stationary-side hinge bracket 15 that is restrained from rotating against the shaft 13. Thereby, one end of the torsion bar 14 is fixed to the rotation-side hinge bracket 16 and the other end is fixed to the stationary-side hinge bracket 15. Also, via these hinge brackets 16 and 15, one end of the torsion bar 14 is indirectly fixed to the rotation-side member 3 and other end is fixed to the stationary-side member 2.

Then, the stationary-side hinge bracket 15 is fixed to the stationary-side member 2, and the rotation-side hinge bracket 16 is fixed to the rotation-side member 3, so as to incorporate the hinge device 11 into a personal computer 1 as shown in Figure 1. When the rotation-side member 3 is opened or closed ― i.e., rotated in the forward or reverse direction ― under the condition that the hinge device 11 is incorporated in the personal computer 1, both of the sides of the mounting plate part 16b of the rotation-side hinge bracket 16 are nipped, under a pressurized condition, between the friction plate 17 and the spring washer 18, and therefore friction torque is generated between the latter two parts. Accordingly, if the opening or closing of the rotation-side member 3 is stopped when the rotation-side member 3 is at a desired angle, the rotation-side member 3 stops at that desired angle.

When the rotation-side member 3 is rotated, the torsion bar 14 is twisted via the rotation-side hinge bracket 16, and therefore torque (return torque) in the direction opposite to the direction of the rotation of the rotation-side member 3 is stored in the torsion bar 14. Accordingly, the weight of the rotation-side member 3 is sustained by the resultant force of both the friction torque of the friction-force generating mechanism 12 and the return torque of the torsion bar 14. Therefore, the force needed to move the rotation-side member 3 in the direction that is opposite to the preceding direction ― in Figure 1, for example, in the direction shown by arrow B, which is opposite to the direction shown by arrow A ― can be reduced, resulting in improved operability in both the forward and reverse directions.

In this embodiment, the torsion bar 14 for reducing the operating force in both the forward and reverse directions penetrates through the shaft 13 of the friction-force generating mechanism 12, and therefore the friction-force generating mechanism 12 and the torsion bar 14 take up only a small space radially, and thus downsizing is possible. Also, the torsion bar 14, in contrast to a coil spring whose torque varies depending on the number of its coils, shows little variation in torque, which can arise from variation in the number of coils of coil spring. Therefore, the torque can be easily adjusted, and the friction-force generating mechanism 12 and the torsion bar 14 remain stable after torque adjustment, and therefore move almost not at all or make no noise. Furthermore, the torsion bar 14 is able, as it is, without any modification, to store torque in the direction opposite to both the forward and reverse rotation directions, and therefore a switching member for switching the direction of the torque is not necessary, reducing the number of parts needed for the hinge device. Therefore, assembly of the hinge device becomes easier, and its weight and cost can be reduced.

In this embodiment, under the condition that the rotation-side member 3 is stopped at a neutral position ― which means that the rotation-side member 3 is approximately perpendicular to the stationary member 2 ― as shown in Figure 1, it is easy to adjust the torque of the torsion bar 14 to approximately zero. This is because, as described above, the torque of the torsion bar 14 does not vary like that of a coil spring, whose torque varies according to the number of coils, and thus variation in the torque of the torsion bar 14 is very small.

After the torque at the neutral position has been adjusted to approximately zero, then when the rotation-side member 3 rotates from the neutral position in the direction shown by arrow A in Figure 1, the return torque is stored in the torsion bar 14 in such a way that the return torque increases as the rotation angle of the rotation-side member 3 decreases. Similarly, when the rotation-side member 3 rotates from the neutral position in the direction shown by the arrow B in Figure 1, return torque is stored in the torsion bar 14 in such a way that the return torque decreases as the rotation angle of the rotation-side member 3 increases. Accordingly, the return torque of the torsion bar 14 is maximal when the rotation-side member 3 is in either the fully opened or fully closed position. At the fully opened and fully closed positions, the amount of force needed to rotate the rotation-side member 3 is smallest, and therefore operability of the rotation-side member 3 at an initial stage of rotation ― in either the forward or reverse direction ―is significantly improved.

### (Embodiment 2)

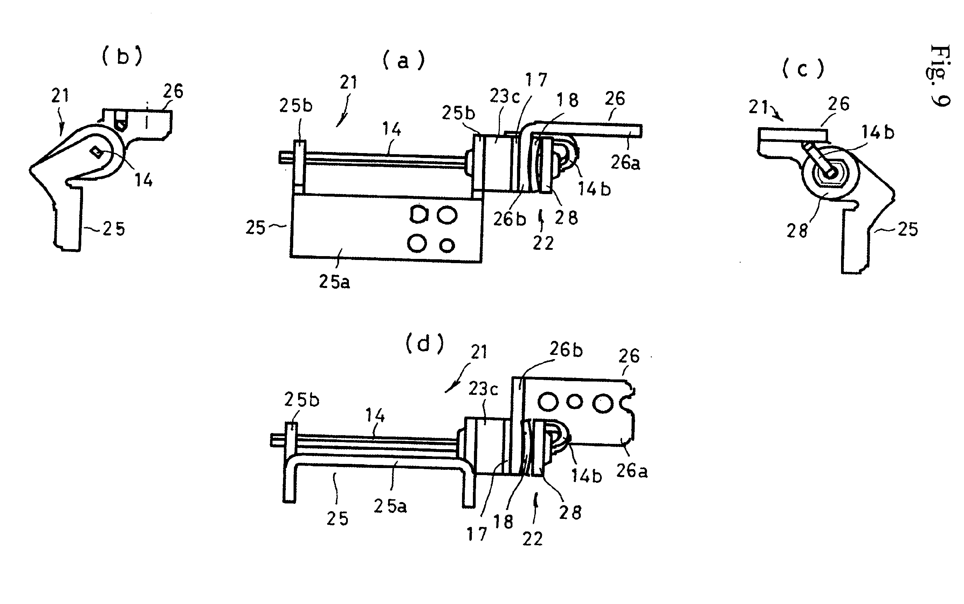

Figures 9 to 12 show Embodiment 2 of the present invention. Figure 9 shows Embodiment 2 in an assembled condition. The hinge device 21 of this embodiment comprises a friction-force generating mechanism 22 having a shaft 23, a torsion bar 14 that penetrates inside the shaft 23, a stationary-side hinge bracket 25, and a rotation-side hinge bracket 26.

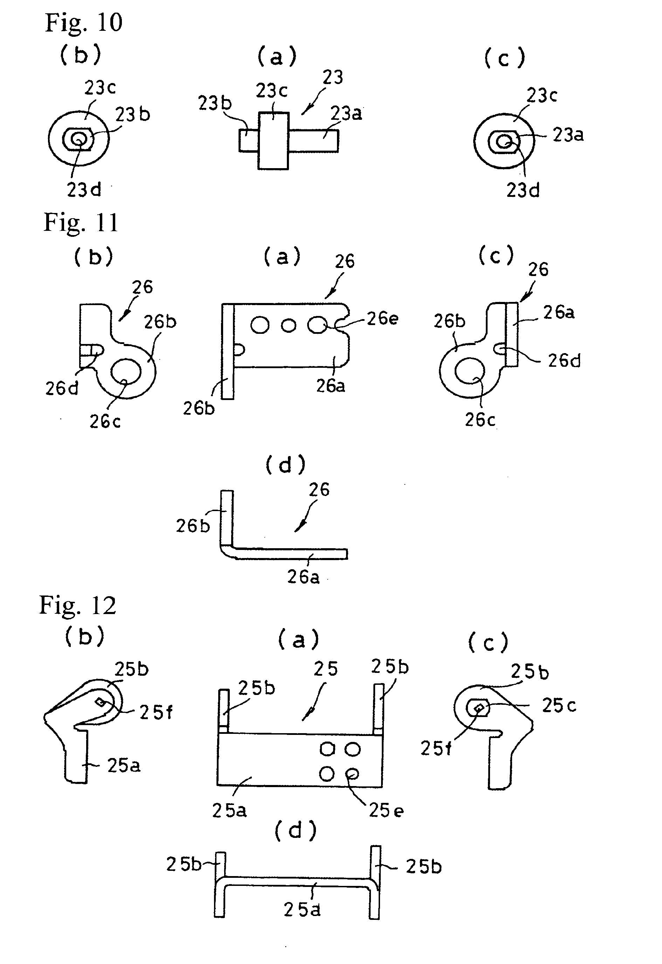

As shown in Figure 10, the shaft 23 is formed in such a shape that shaft parts 23a, 23b coaxially extend from both sides of the large-diameter flange part 23c. Also, a circular through-hole 23d, through which the torsion bar 14 penetrates, is formed in the axial direction of the shaft 23. Both the shaft parts 23a and 23b have a non-circular shaped ― i.e., approximately oval ― cross-section, which is obtained by being cut in such a way that the top side of the cross-section and the bottom side of the cross-section are parallel to each other.

The torsion bar 14 of Embodiment 2 is similar to that of Embodiment 1 (see Figure 8). The difference is that the torsion bar 14 in this embodiment has a non-circular ― rectangular, to be more specific ― cross-section. In this embodiment, the shaft 23 is short, and therefore, as shown in Figure 9, under a condition that the shaft 23 penetrates through the through-hole 23d, most of the torsion bar 14 is exposed outside the shaft 23.

The fiction-force generating mechanism 22 comprises ― in addition to the shaft 23 ― a friction plate 17 (shown in Figure 4), and a spring washer 18 (shown in Figure 5). One shaft part 23a of the shaft 23 is inserted into the friction-force generating mechanism 22, so that the friction plate 17 and the spring washer 18 are mounted to the shaft 23 under the condition that the rotation of the friction plate 17 and the spring washer 18 is restrained.

The friction-force generating mechanism 22 also has a retainer plate 28. The retainer plate 28 is formed so as to have the same shape as that of the friction plate 17, and it has a non-circular axial hole (not shown), through which the shaft 23 penetrates under an engaged condition. Thereby, the retainer plate 28 is mounted to the shaft 23 under a rotation-restraining condition.

As shown in Figure 11, the rotation-side hinge bracket 26 is constituted such that the stationary plate part 26a and the mounting plate part 26b are integrally formed under the condition that the stationary plate part 26a and the mounting plate part 26b are approximately perpendicular to each other. The stationary plate part 26a is to be fixed to the rotation-side member 3 (see Figure 1), and therefore is formed so as to have a fixing hole 26e. The mounting plate part 26b is to be mounted to the shaft part 23a of the shaft 23, and therefore is formed so as to have an axial hole 26c, through which the shaft part 23a of the shaft 23 penetrates. The axial hole 26c has a circular shape, in contrast to the non-circular shape of the shaft part 23a, so that the rotation-side hinge bracket 26 can rotate against the shaft 23. A lock hole 26d for locking one end of the torsion bar 14 is formed on the mounting plate part 26b.

As shown in Figure 12, the stationary-side hinge bracket 25 has a fixing plate part 25a, and mounting plate parts 25b that are integrally formed on both sides of the fixing plate part 25a in such a way that the mounting plate parts 25b are approximately perpendicular to the fixing plate part 25a. The fixing plate part 25a is to be fixed to the stationary-side member 2 (see Figure 1), and therefore it is formed so as to have a fixing hole 25e.

Of the mounting plate parts 25b that are on the two sides of the fixing plate part 25a, the mounting plate part 25b that is positioned on the shaft 23 side is to be mounted to the shaft 23, and therefore is formed so as to have a non-circular axial hole 25c, through which the shaft 23 penetrates. The other shaft part 23b of the shaft 23 penetrates through the axial hole 25c, so that the stationary-side hinge bracket 25 is mounted to the shaft 23 under the condition that the stationary-side hinge bracket 25 restrains the rotation of the shaft 23. Furthermore, rectangular supporting holes 2sf, through which the torsion bar 14 penetrates, are formed in the mounting plate parts 25b on both sides of the fixing plate part 25a.

In the hinge device 21 of this embodiment, the friction plate 17, the mounting plate 26b of the rotation-side hinge bracket 26, the spring washer 18, and the retainer plate 28 are sequentially mounted to the shaft part 23a of the shaft 23. In this case, the spring washer 18 is arranged in such a way that the peak of its U-shape makes contact with the mounting plate part 26b of the rotation-side hinge bracket 26. Then, one end of the shaft part 23a of the shaft 23 is clamped under the condition that the mounting plate part 26b is pressurized and bent, so as to form the friction-force generating mechanism 22.

In addition, the torsion bar 14 penetrates through the through-hole 23d of the shaft 23, and then penetrates through the non-circular supporting holes 25f in the mounting plate parts 25b of the stationary-side hinge bracket 25. Then, the U-shaped lock part 14b is engaged with the lock hole 26d of the rotation-side hinge bracket 26, and the end of the torsion bar 14 that has penetrated through the non-circular supporting holes 25f of the stationary-side hinge bracket 25 is clamped and deformed, so that the torsion bar 14 is mounted under the condition that the torsion bar 14 is prevented from being detached. Thereby, both ends of the torsion bar 14 are indirectly fixed ― via the stationary-side hinge bracket 25 and the rotation-side hinge bracket 26― to the rotation-side member 3 and the stationary-side member 2.

In this embodiment, the torsion bar 14 has a non-circular cross-section and penetrates through the supporting holes 25f ― whose shapes are the same as the cross-section of the torsion bar 14 ― in the stationary-side hinge bracket 25, so that the torsion bar 14 is mounted in a manner so as to be restrained from rotating.

The hinge device 21 in Embodiment 2 has similar functions and effects to those of the hinge device 11 in Embodiment 1. In particular, because the shaft 23 is short, the hinge device 21 is advantageous in that its weight can be less than that of the hinge device of Embodiment 1.

### (Embodiment 3)

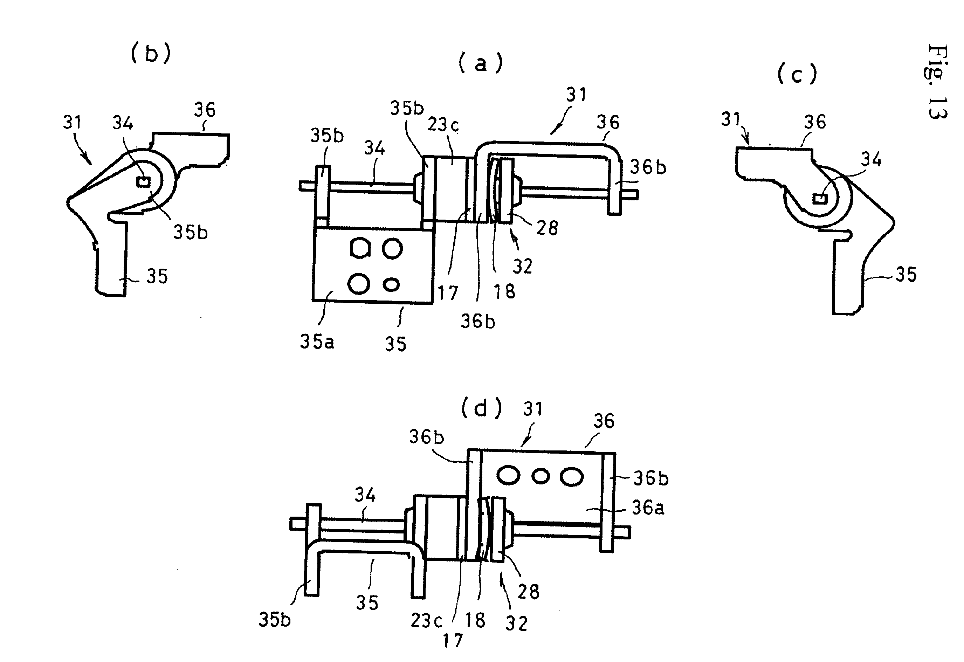

Figures 13 to 15 show Embodiment 3 of the present invention; Figure 13 shows Embodiment 3 in an assembled condition. The hinge device 31 in this embodiment includes ― as is similar to Embodiment 2 ― a shaft 23, a friction plate 17, a spring washer 18, and a retainer plate 28. The hinge device 31 of this embodiment also has a torsion bar 34, a stationary-side hinge bracket 35, and a rotation-side hinge bracket 36.

The torsion bar 34 is formed so as to have a rectangular cross-section.

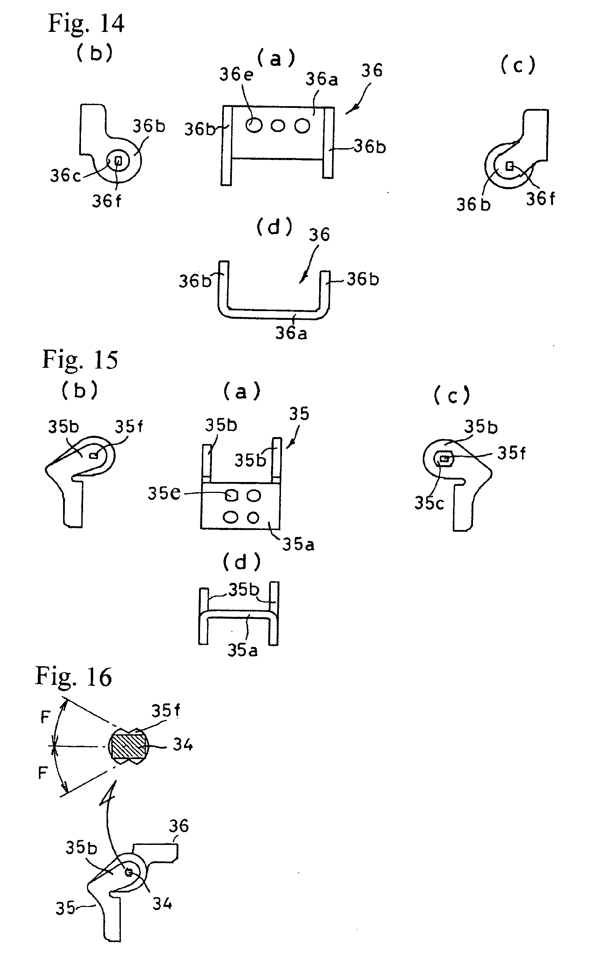

As shown in Figure 14, the rotation-side hinge bracket 36 is formed into a U-shape, integrally having mounting plates 36b on both sides of a stationary plate part 36a, which has fixing holes 36e for fixing the stationary plate part 36a to the rotation-side member 3. Non-circular supporting holes 36f, through which the torsion bar 34 penetrates, are formed on both sides of each of the mounting plate parts 36b. Also, a circular axial hole 36c, through which the shaft part 23a of the shaft 23 penetrates, is formed in the mounting plate part 36b on the shaft 23 side, so that the rotation-side hinge bracket 36 can be rotatably mounted to the shaft 23.

The stationary-side hinge bracket 35 is formed into a shape that is approximately the same as that of the corresponding part of Embodiment 2. Therefore, the mounting plate parts 35b are formed on both sides of the stationary plate part 35a in such a way that the mounting plate parts 35b are perpendicular to the stationary plate part 35a, and fixing holes 35e are formed in the stationary plate part 35a. Also, non-circular (rectangular) supporting holes 35f, through which the torsion bar 34 penetrates, are formed on both sides of the mounting plate parts 35b, and on the shaft 23 side of the mounting plate part 35b there is formed a non-circular axial hole 35c, through which the shaft 23 penetrates under a rotation-restraining condition. The stationary-side hinge bracket 35 is mounted to the shaft 23 under a rotation-restraining condition.

In this embodiment a friction-force generating mechanism 32 can be assembled, as in Embodiment 2. The linear torsion bar 34 is mounted by penetrating through the supporting holes 36f of the mounting plate parts 36b on both sides of the rotation-side hinge bracket 36, the shaft 23, and then the supporting holes 35f of the mounting plate parts 35b on both sides of the stationary hinge bracket 35. Then, both ends of the torsion bar 34 are clamped and deformed so that the torsion bar 34 cannot be detached. Thereby, the two ends of the torsion bar 34 are indirectly fixed ― via the stationary-side hinge bracket 35 and the rotation-side hinge bracket 36 ― to the rotation-side member 3 and the stationary-side member 2, respectively.

This embodiment has similar functions and effects to those of Embodiments 1 and 2.

Figure 16 shows a variation of this embodiment. In this embodiment, the supporting hole 35f of the stationary-side hinge bracket 35 does not have a rectangular cross-section, but is formed so as to have deformed grooves in such a way that the supporting hole 35f has a cross-section with two V-shaped bulges that rise from the top and bottom portions of said cross-section, and such that the slope of each of said V-shaped bulges slants in relation to the top or bottom face, respectively of torsion bar 34. Such a cross-section makes it possible for the torsion bar 34 to move freely within the area of the relief parts F without being twisted.

Because of the aforementioned relief parts 35f, the torsion bar 34 is not twisted in the area of the relief parts F even when the rotation-side member 3 is rotated against the stationary-side member 2 so as to give torsion to the torsion bar 34. Accordingly, even when the rotation-side member 3 is rotated, return torque is not stored in the torsion bar 34 as long as the torsion bar 34 is in the area of the relief parts F. In such an embodiment, the range within which return torque is to be generated in the torsion bar 34 can be changed according to the desired rotation angle of the rotation-side member 3. Therefore, the present invention offers increased freedom of design, making possible a greater variety of such hinge devices.

### (Embodiment 4)

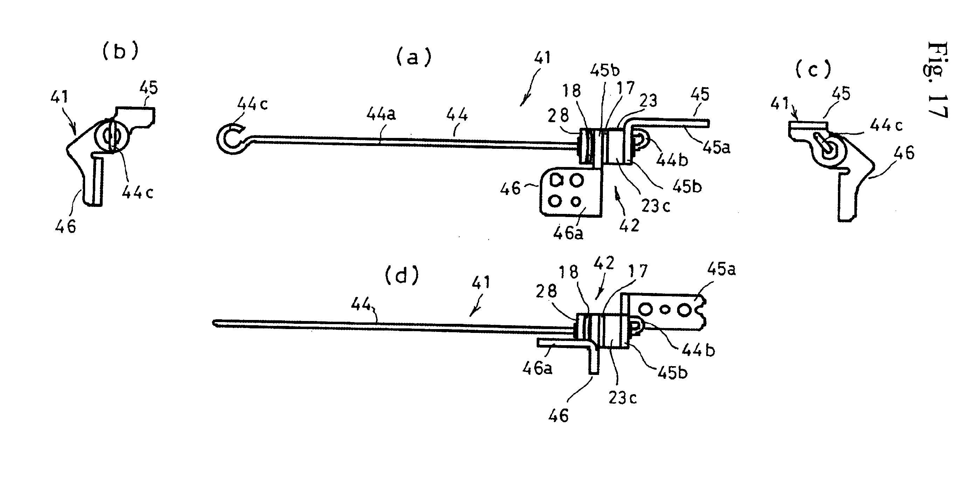

Figures 17 to 22 show Embodiment 4 of the present invention. In the hinge device 41 of this embodiment, the friction-force generating mechanism 42 comprises
a shaft 23,
a friction plate 17 that is overlaid on the flange part 23c of the shaft 23 in such a way that the surface of friction plate 17 makes contact with the surface of the flange part 23c of the shaft 23,
a spring washer 18 that nips the mounting plate part 45b of the stationary-side hinge bracket 45 that is placed between the spring washer 18 and the friction plate 17, and
a retainer plate 28 that is overlaid on the spring washer 18.

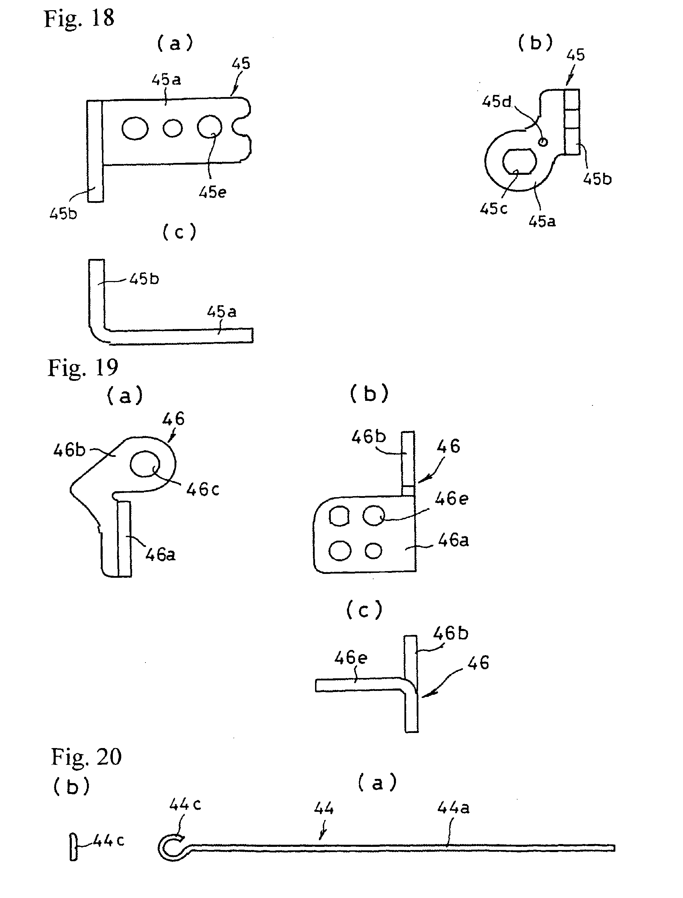

Figure 18 shows the stationary-side hinge bracket 45 in this embodiment, and Figure 19 shows the rotation-side hinge bracket 46 in this embodiment, respectively. The stationary-side hinge bracket 45 is mounted to the stationary-side member 2, and the rotation-side hinge bracket 46 is mounted to the rotation-side member 3.

The rotation-side hinge bracket 45 comprises
fixing plate part 45a, which is formed so as to have holes 45e for fixing it to the stationary-side member 2, and
a mounting plate part 45b, which is formed integrally with and perpendicular to the stationary plate part 45a, and which has a axial hole 45c, whose shape is similar to that of the cross-section of the shaft 23, and a lock hole 45d for locking one end of the torsion bar 44. The stationary-side hinge bracket 45 is mounted to the shaft 23 under a rotation-restraining condition.

The rotation-side hinge bracket 46 comprises
a fixing plate part 46a, which is formed so as to have holes 46e for fixing it to the rotation-side member 3, and
a mounting plate part 46b, which is formed integrally with and perpendicular to the stationary plate part 46a, and which has a circular axial hole 46c, through which the shaft 23 penetrates. The rotation-side hinge bracket 46 is rotatably mounted to the shaft 23.

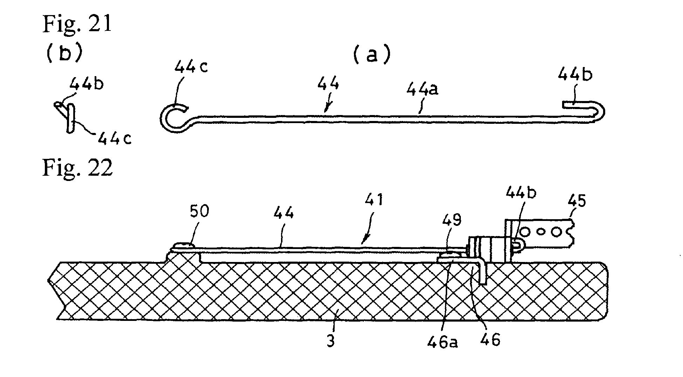

Figure 20 shows a torsion bar 44 that is used in this embodiment. The torsion bar 44 has a linear main body 44a and a circular cross-section, and one of its ends (the left-side end in Figure 20) is formed so as to have a mounting part 44c that is curved like a C-shape pointing in the lengthwise direction of the main body 44a. Figure 20 shows the torsion bar 44 in a pre-assembly condition, when the other end (opposite to the C-shaped end) of the main body 44a has not yet been processed and therefore still has a linear shape. At the time of assembly, this other end is folded into a U-shape so as to constitute a lock part 44b, as shown in Figure 21.

In this embodiment, the above-mentioned friction-force generating mechanism 42 is assembled in the hinge device 41, as shown in Figure 17. At the time of assembly, both ends of the shaft 23 are clamped under the condition that the spring washer 18 is bent and pressurized, so that the angle of the rotation-side member 3 can be maintained by friction force.

After the friction-force generating mechanism 42 is mounted, the torsion bar 44 penetrates through it, starting with linear end of the torsion bar 44. The torsion bar 44 first penetrates the retainer plate 28 and then penetrates the friction-force generating mechanism 42. After the penetration is complete, the penetrated linear end of the torsion bar 44 is folded into the aforementioned U-shape, forming the lock part 44b. The lock part 44b is then inserted into the lock hole 45d of the stationary-side hinge bracket 45 and locked therein, and the tip of the lock part 44b is clamped and smashed, so as to prevent the torsion bar 44 from being detached. In this way, assembly of this embodiment of the hinge device 41 is completed.

In this hinge device 41, as shown in Figure 17, most of the torsion bar 44 is exposed outside the shaft 23. Figure 22 shows the condition when the hinge device 41 is mounted onto a display (namely, the rotation-side member 3). The stationary plate part 46a of the rotation-side hinge bracket 46 is brought into contact with the face of the rotation-side member 3. Under such a contact condition, the screw 49 is tightened, so that the rotation-side hinge bracket 46 is fixed. In addition, the mounting part 44c of the torsion bar 44, which is exposed outside the shaft 23, is fixed 50 to the same face of the rotation-side member 3 to which the stationary plate part 46a is fixed, by using a screw. Thereby, the torsion bar 44 is directly fixed to the rotation-side member 3.

Under such a structure, as is similar to that of Embodiment 1, the friction-force generating mechanism 42 holds the rotation-side member 3 at a specified angle. Also, as the rotation-side member 3 rotates in the forward or reverse direction, the torsion bar 44 is twisted, and therefore return torque in the opposite direction is stored in the torsion bar 44. Accordingly, the rotation-side member 3 can be rotated in the opposite direction with less force, which improves operability.

In this embodiment, the torsion bar 44 is directly fixed to the rotation-side member 3, and therefore no other members than the screws 49, 50 are necessary for fixing the torsion bar 44. Therefore, the total number of parts needed to make the hinge device is reduced, its structure is simple, its weight is reduced, its assembly is easier, and it can be produced less expensively.

### (Embodiment 5)

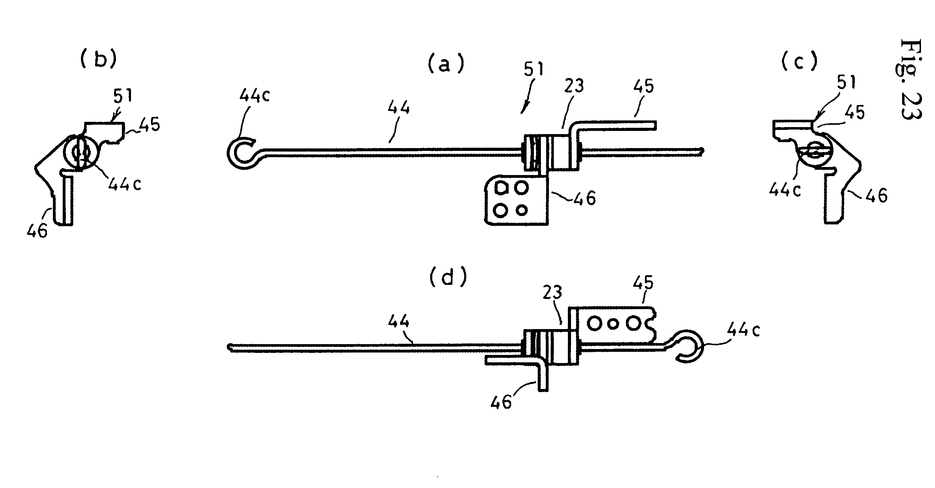

Figure 23 shows a hinge device 51 in Embodiment 5 of the present invention. In this hinge device 51, the two sides of the torsion bar 44 of Embodiment 4 are exposed on the two opposite axial sides of the shaft 23. The torsion bar 44 is processed in such a way that both of its ends that are exposed outside the shaft 23 are curved so as to have a C-shape. Thereby, mounting parts 44c are formed at both ends of the torsion bar 44.

In this embodiment, the mounting parts 44c at the two ends of the torsion bar 44 can be directly fixed ― with screws and the like ― to both the stationary-side member 2 and the rotation-side member 3, respectively. Therefore, no other members than screws or the like are necessary for fixing the torsion bar 44 to both the stationary-side member 2 and the rotation-side member 3, so that the number of parts for the hinge device can be reduced even further, and thus the weight and cost of the hinge device also can be reduced further.

### Industrial Applicability

The hinge device of the present invention has the following advantages: Because of the torsion bar, the force necessary to rotate the rotation-side member in the forward or reverse direction is reduced. And because the torsion bar penetrates through the shaft of the friction-force generating mechanism, the entire hinge device takes up only a small space radially, and therefore downsizing of the hinge device is possible. Further, the torsion bar shows less variation in its torque than a conventional hinge device does, and thus the torque at the neutral position can be easily adjusted. In addition, because the torsion bar can store torque whose direction is opposite to the forward or reverse direction of the rotation-side member, a switching member is not necessary, and so the number of parts for the entire hinge device can be reduced. Also, the structure of the hinge device is simple, its assembly is easy, and its weight is low.

## Claims

1. A hinge device comprising
a friction-force generating mechanism that has a shaft supporting ― rotatably in both the forward and reverse directions ― a rotation-side member on the stationary-side member, and that uses friction force to hold the angle of the rotated rotation-side member, and
a torsion bar that penetrates through said shaft in the axial direction, with one end of said torsion bar directly or indirectly fixed to said stationary-side member, and the other end of said torsion bar directly or indirectly fixed to the rotation-side member, and that ― by being twisted by the rotation of the rotation-side member in either the forward or reverse direction ― stores torque that energizes the rotation-side member in the direction opposite to said rotation of the rotation-side member.

2. A hinge device as set forth in Claim 1, and
wherein said torsion bar is arranged in such a way that the torque is approximately zero when the rotation-side member is approximately perpendicular to the stationary-side member, and that
said torque increases as the angle of the rotation-side member changes, from its approximately perpendicular position, due to the rotation of the rotation-side member in the forward or reverse direction.

3. A hinge device as set forth in Claim 1 or 2, and wherein
hinge brackets ― which are connected with the stationary-side member and the rotation-side member, respectively ― are attached to said shaft, and
said torsion bar penetrates through these hinge brackets.

4. A hinge device as set forth in any of Claims 1 to 3, and wherein
at least one end of said torsion bar is exposed outside the shaft, and
the exposed end is directly fixed to either the stationary-side member or the rotation side member.

5. A hinge device as set forth in Claim 3 or 4, and wherein
one end of said torsion bar is fixed to and engaged with either a hinge bracket of the corresponding stationary-side member or the corresponding rotation-side member, as the case may be.

6. A hinge device as set forth in any of Claims 3 to 5, and wherein
there is formed in said hinge bracket a relief part that prevents twisting of the torsion bar when the angle of the rotation-side member against the stationary-side member is within a predetermined range.

7. A hinge device as set forth in Claim 1, wherein
said friction-force generating mechanism is equipped with a spring washer that (1) is formed so as to have a U-shaped cross-section, and (2) directly or indirectly overlaps and comes into contact with said shaft under a condition that the spring washer is bent.
